# EUROPEAN PATENT APPLICATION

(11) **EP 2 398 108 A1**
(43) Date of publication of application: **21.12.2011**
(21) Application number: 10832812.1
(22) Date of filing: 11.11.2010
(51) Int. Cl.: H01M 10/50, H01M 2/10

(54) **BATTERY MODULE**

(30) Priority: 25.11.2009 JP 2009267978; 25.11.2009 JP 2009267979
(71) Applicant: Panasonic Corporation, Kadoma-shi Osaka 571-8501 (JP)
(72) Inventor: KOZU, Katsumi, Osaka-shi Osaka 540-6207 (JP)
(74) Representative: Grünecker, Kinkeldey, Stockmair & Schwanhäusser
(86) International application number: PCT/JP2010/006638
(87) International publication number: WO 2011/064956

(57) **Abstract**

To hold cells while efficiently adjusting temperature of the cells, a battery module (1) includes: a plurality of columnar cells (20), and a holder (3) for holding the cells (20). The holder (3) includes cylindrical container portions (31) for containing the cells (20), respectively, refrigerant passages (34) and phase change elements (4) for adjusting temperature of the cells (20), and pressing walls (33) for pressing the cells (20) to bring outer circumferential surfaces of the cells (20) into contact with inner circumferential surfaces of the container portions (31), respectively. The holder (3) is made of an aluminum alloy.

## Description

### TECHNICAL FIELD

The present invention relates to a battery module including a plurality of cells.

### BACKGROUND ART

Demands for reusable secondary batteries have been and are being increased in view of conservation of resources and energy. Such secondary batteries are used as power sources for driving various types of portable electronic devices and mobile communication devices, such as cellular phones, digital cameras, video cameras, notebook computers, etc. The demands for the secondary batteries are increasing more and more as hybrid vehicles and electric vehicles have become popular.

As an example of the secondary batteries, a battery module including a plurality of electrically connected general-purpose cells has been known. For example, a battery module of Patent Document 1 includes a plurality of general purpose cells called "18650." In this battery module, the plurality of cells are water-cooled, or air-cooled to adjust temperature of the plurality of cells. In general, temperature of the cells significantly influences performance and life of the cells. Thus, in the battery module of Patent Document 1, a cooling pipe through which a liquid refrigerant flows is arranged near the plurality of cells, or air is circulated around the cells to adjust the temperature of the cells.

In a battery module of Patent Document 2, a plurality of cells are contained in a casing, and a phase change material is provided to fill space between the cells adjacent to each other. The phase change material is in contact with the cells, and absorbs heat from the cells to change its phase from a solid phase to a liquid phase. Thus, operating temperature of the cells is adjusted to be within a predetermined temperature range.

### CITATION LIST

### PATENT DOCUMENTS

[Patent Document 1] Japanese Patent Publication No. 2008-541386
[Patent Document 2] Japanese Translation of PCT International Application No. 2003-533844

### SUMMARY OF THE INVENTION

### TECHNICAL PROBLEM

The structure for adjusting the temperature of the battery module of Patent Document 1 has the following problems. Specifically, when the cooling pipe is arranged near the cells, efficiency of heat exchange between the cells and the refrigerant is not good, and the temperature of the cells cannot efficiently be adjusted. When the air circulates around the cells, cooling of the cells and secure holding of the cells cannot be achieved at the same time. Specifically, the plurality of cells constituting the battery module have to be securely held. However, with the air circulating around the cells in the battery module of Patent Document 1, the cells cannot be securely held. Thus, the structure for adjusting the temperature of the battery module of Patent Document 1 is still susceptible to improvement.

In view of the foregoing, the present invention has been achieved. In a first aspect of the present invention, an object of the invention is to efficiently adjust of the temperature of the cells while securely holding the cells.

In such a battery module, one or some of the cells may abnormally generate heat. The abnormal heat generation designates that the cell generates heat higher than storage temperature (temperature at which the cells are less likely to reduce their performance even after a long time storage period, and which is higher than operating temperature, and is lower than maximum allowable temperature). When the abnormal heat generation occurs, the performance of the cells is reduced, and the cells may cause thermal runaway in some cases.

For example, when an internal short circuit occurs in the cell, the cell is heated to cause the abnormal heat generation. In particular, oxygen is released from a high temperature electrode, and released oxygen chemically reacts with surrounding substances, such as an electrolyte etc. Such chemical reaction further increases the heat of the cell, thereby causing the thermal runaway. This leads to additional abnormal heat generation. The abnormal heat generation occurs also when a large current flows through the cell due to an external short circuit, or the cell is overcharged.

Even when one of the cells abnormally generates heat, the battery module can operate normally because the battery module includes the plurality of cells. However, when the heat abnormally generated by the one of the cells is transferred to a different cell adjacent thereto, the different cell is also abnormally heated, thereby deteriorating its performance. Further, a cell adjacent to the different cell may also be heated, thereby deteriorating its performance. Thus, in the battery module including the plurality of cells, the heat abnormally generated by one of the cells affects the adjacent normal cells, and the abnormal heat generation may occur like chain reactions.

In view of the foregoing, the present invention has been achieved. In a second aspect of the present invention, an object of the invention is to reduce adverse effect of the abnormal heat generation by one of the plurality of cells on the other cells.

### SOLUTION TO THE PROBLEM

In a first aspect of the present invention, the present invention is directed to a battery module including a plurality of columnar cells, and a holder for holding the cells. The holder is made of metal or highly thermally conductive resin, and includes cylindrical container portions for containing the cells, respectively, a temperature adjusting portion for adjusting temperature of the cells, and pressing portions for pressing the cells toward inner circumferential surfaces of the container portions, respectively, and outer circumferential surfaces of the cells pressed by the pressing portions are in contact with the inner circumferential surfaces of the container portions, respectively.

In a second aspect of the present invention, the present invention is directed to a battery module including a plurality of cells. The battery module includes: a holder for holding the plurality of cells; and a phase change element which is arranged in the holder, and changes its phase by absorbing heat of the cells, wherein the phase change element is not in contact with the cells, and is thermally connected to the cells through the holder.

The description that the phase change element "is thermally connected to the cells through the holder" means that the cells and the phase change element do not directly exchange heat, but the heat of the cells is conducted to the phase change element through the holder, and the heat of the phase change element is conducted to the cells through the holder.

### ADVANTAGES OF THE INVENTION

According to the first aspect of the invention, the heat of the cells is efficiently conducted to the temperature adjusting portion through the holder. This allows efficient adjustment of the temperature of the cells. Since the cells are contained in the container portions with the outer circumferential surfaces of the cells in contact with the inner circumferential surfaces of the container portions, the cells can securely be held by the holder.

According to the second aspect of the invention, the heat abnormally generated by the cell can be absorbed by the phase change element through the holder. Therefore, increase in temperature of the other cells can be reduced.

### BRIEF DESCRIPTION OF THE DRAWINGS

[FIG. 1] FIG. 1 is a cross-sectional view illustrating a battery module of a first embodiment.
[FIG. 2] FIG. 2 is an exploded perspective view illustrating a battery unit.
[FIG. 3] FIG. 3 is a longitudinal cross-sectional view of a cell.
[FIG. 4] FIG. 4 is a plan view illustrating a battery unit in which a positive electrode connector plate, a spacer, and a lid are not shown.
[FIG. 5] FIG. 5 is a longitudinal cross-sectional view of the battery unit taken along the line V-V of FIG. 4.
[FIG. 6] FIG. 6 is a longitudinal cross-sectional view of the battery unit taken along the line VI-VI of FIG. 4.
[FIG. 7] FIG. 7 is a bottom view of a lid.
[FIG. 8] FIG. 8 is an enlarged plan view illustrating portion of a battery unit of a second embodiment in which a positive electrode connector plate, a spacer, and a lid are not shown.
[FIG. 9] FIG. 9 is an enlarged plan view illustrating portion of a battery unit of another embodiment in which a positive electrode connector plate, a spacer, and a lid are not shown.

### DESCRIPTION OF EMBODIMENTS

Embodiments of the present invention will be described below with reference to the drawings.

### [First Embodiment]

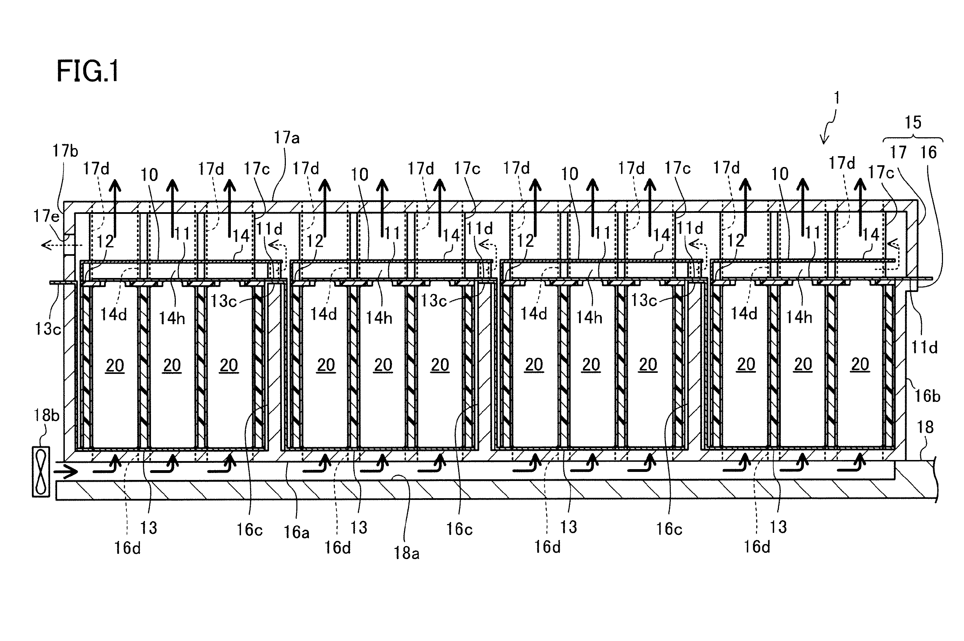

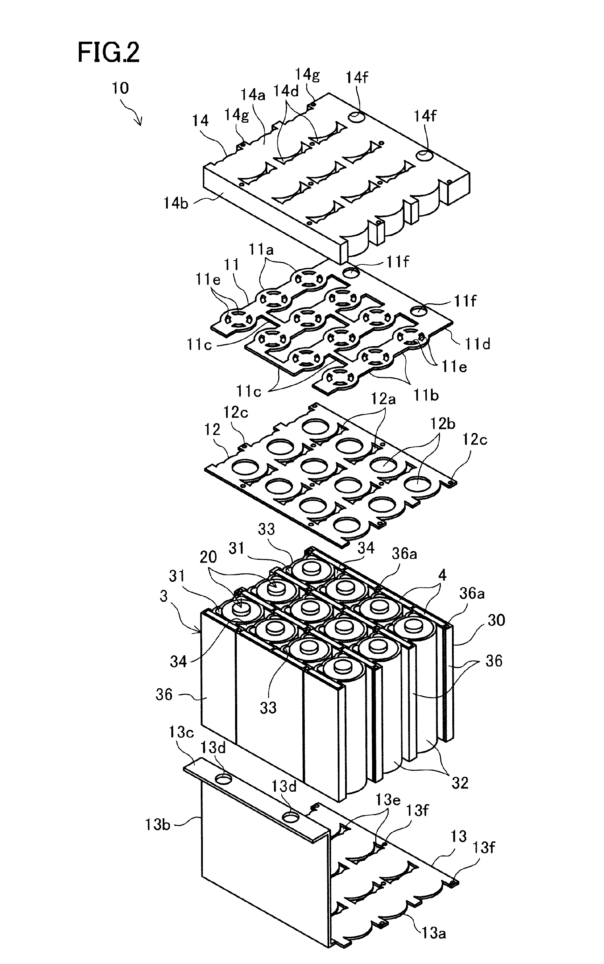

FIG. 1 is a cross-sectional view of a battery module of a battery module 1 of a first example embodiment of the present invention, and FIG. 2 is a perspective view of a disassembled battery unit. In FIG. 1, cells 20 are depicted only by outlines.

The battery module 1 includes a plurality of cells 20, holders 3 for holding the cells 20, positive electrode connector plates 11 for connecting positive electrodes of the cells 20, spacers 12 arranged between end faces of the cells 20 closer to the positive electrodes and the positive electrode connector plates 11, negative electrode connector plates 13 for connecting negative electrodes of the cells 20, lids 14 attached to the holders 3 to form discharge rooms 14h described later outside the positive electrodes of the cells 20, and a case 15 containing them. The battery module 1 is incorporated as a power source in a hybrid vehicle or an electric vehicle, for example. In FIG. 1, the battery module 1 is placed on a floor 18 of a hybrid vehicle.

In the battery module 1 of the present embodiment, 12 cells 20 constitute a single battery unit 10. The battery module 1 includes four battery units 10. The four battery units 10 are contained in the case 15. Each of the battery units 10 includes a single holder 3, a single positive electrode connector plate 11, a single spacer 12, a single negative electrode connector plate 13, and a single lid 14. Specifically, 12 cells 20 are held by the single holder 3 in each of the battery units 10. In each of the battery units 10, positive electrode terminals of the cells 20 are connected to the positive electrode connector plate 11, and negative electrode terminals of the cells 20 are connected to the negative electrode connector plate 13. The positive electrode connector plate 11 of one of the battery units 10 is connected to the negative electrode connector plate 13 of another battery unit 10. That is, the four battery units 10, each of which includes the parallel-connected twelve cells 20, are connected in series.

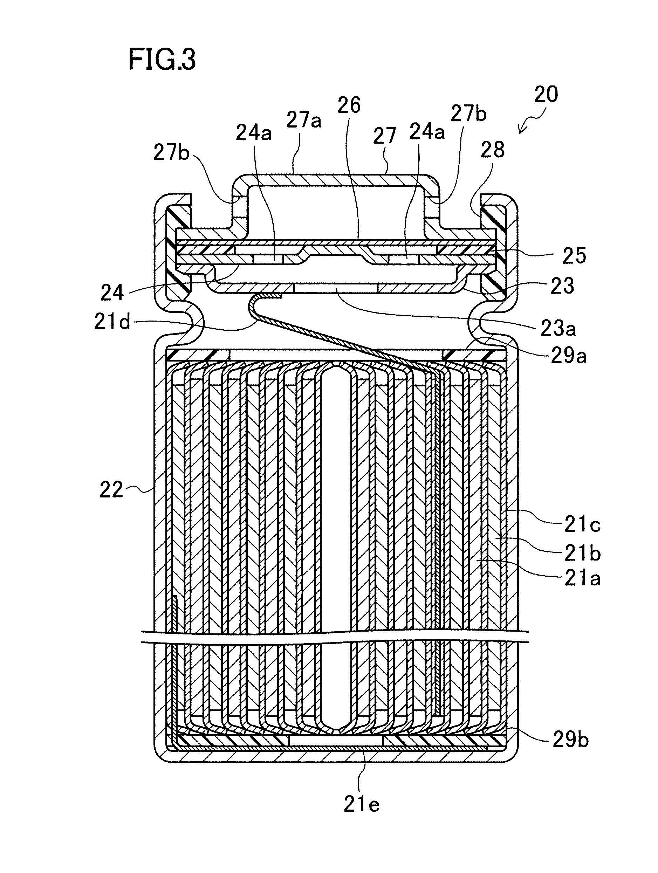

The cell 20 will be described in detail. FIG. 3 shows a longitudinal cross-sectional view of the cell 20.

The cell 20 is a round columnar lithium ion secondary battery, and is a general-purpose 18650 battery, for example. The cell 20 includes a positive electrode 21a and a negative electrode 21b which are wound with a separator 21c interposed therebetween, a battery case 22 containing the positive electrode 21a, the negative electrode 21b, and a nonaqueous electrolyte, and a sealing plate for sealing an open end of the battery case 22. The battery case 22 is in the shape of a cylinder having an open end, and a closed bottom. The sealing plate includes a filter 23, an inner cap 24, an inner gasket 25, a valve element 26, and a terminal plate 27. The filter 23, the inner cap 24, the inner gasket 25, the valving element 26, and the terminal plate 27 are stacked in this order from the inside to the outside of the battery case 22. The open end of the battery case 22 is crimped, thereby bonding rims of the filter 23, the inner cap 24, the inner gasket 25, the valving element 26, and the terminal plate 27 to the open end of the battery case 22 with an outer gasket 28 interposed therebetween. Th e outer gasket 28 is made of resin, and is insulated from the battery case 22 and the sealing plate.

Specifically, the filter 23 is in the shape of a round disc which is recessed inward in an axial direction of the battery case 22 except for the rim thereof. A through hole 23a is formed in the center of the filter 23. The inner cap 24 is in the shape of a round disc having a center protruding outward in the axial direction of the battery case 22. A plurality of through holes 24a are formed in the inner cap 24 to surround the protruding center. The inner gasket 25 is made of resin, and is in the shape of a flat ring. The valving element 26 is in the shape of a round disc. The protruding center of the inner cap 24 is bonded to the valving element 26. A surface of the valving element 26 is provided with a score of a predetermined shape. The terminal plate 27 is in the shape of a round disc, and has a protrusion 27a protruding outward from a center thereof in the axial direction of the battery case 22. A plurality of through holes 27b are formed in a circumferential surface of the protrusion 27a of the terminal plate 27. The terminal plate 27 functions as a positive electrode terminal. The rims of the filter 23, the inner cap 24, the inner gasket 25, the valving element 26, and the terminal plate 27 are stacked.

Insulators 29a and 29b are arranged at axial ends of the wound positive electrode 21a and the negative electrode 21b, respectively. The positive electrode 21a is bonded to the filter 23 through a positive electrode lead 21d. Thus, the positive electrode 21a is electrically connected to the terminal plate 27 through the positive electrode lead 21d, the filter 23, the inner cap 24, and the valving element 26. The negative electrode 21b is bonded to a bottom of the battery case 22 which also functions as a negative electrode terminal through a negative electrode lead 21e.

In the cell 20 configured as described above, internal pressure increases when an internal short circuit etc. occurs. For example, when the internal short circuit occurs in the cell 20, short circuit current flows through the positive and negative electrodes 21a and 21b, and temperatures of the positive and negative electrodes 21a and 21b increase. When the temperatures of the positive and negative electrodes 21a and 21b increase, oxygen in the positive and negative electrodes 21a and 21b is released, and reacts with the electrolyte around the electrodes. As a result, temperature of the cell 20 increases, and the internal pressure increases. Once the internal pressure increases in this way, the valving element 26 expands toward the terminal plate 27, and the valving element 26 and the inner cap 24 are detached. This breaks a current path. When the internal pressure of the cell 20 further increases, the valving element 26 breaks. Since the surface of the valving element 26 is scored, the valving element 26 easily breaks at the score. With the valving element 26 broken, gas in the cell 20 is released outside the battery case 22 through the through hole 23a of the filter 23, the through holes 24a of the inner cap 24, the center opening of the inner gasket 25, the crack of the valving element 26, and the through holes 27b of the terminal plate 27.

The safety mechanism for the cell 20 is not limited to the above-described structure, but may be replaced with a different structure.

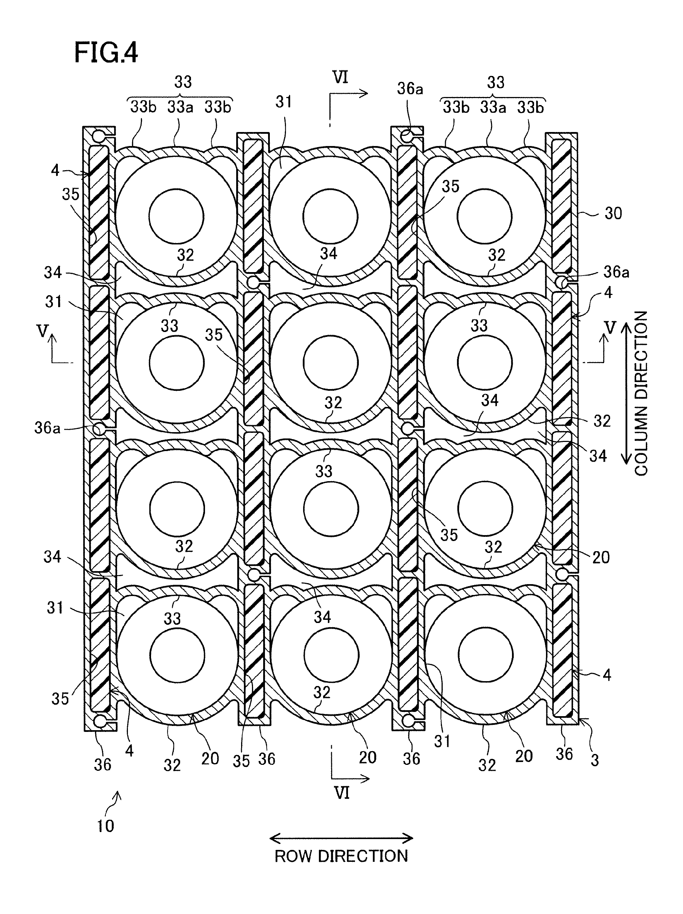

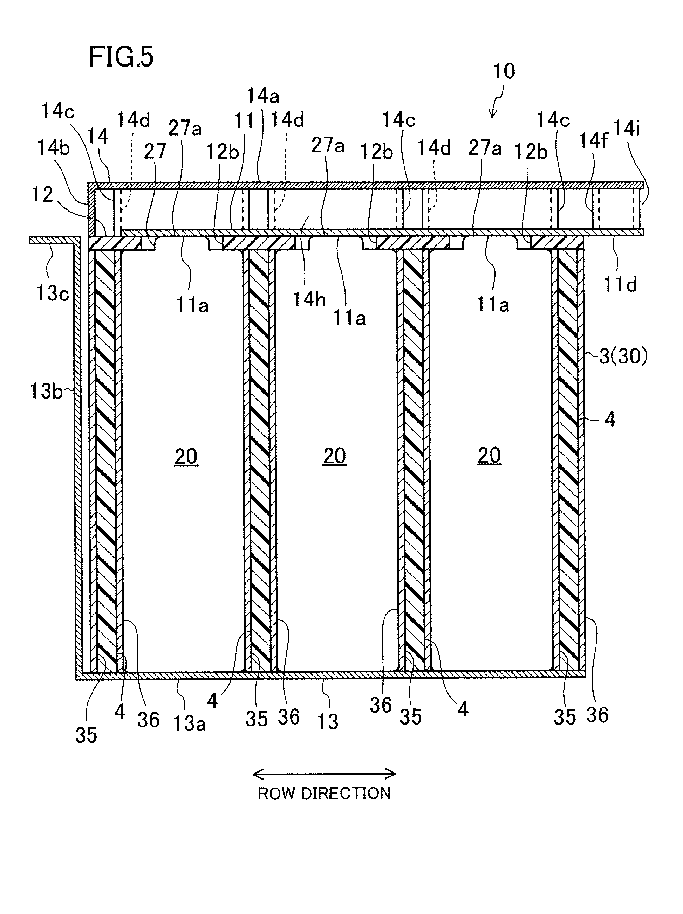

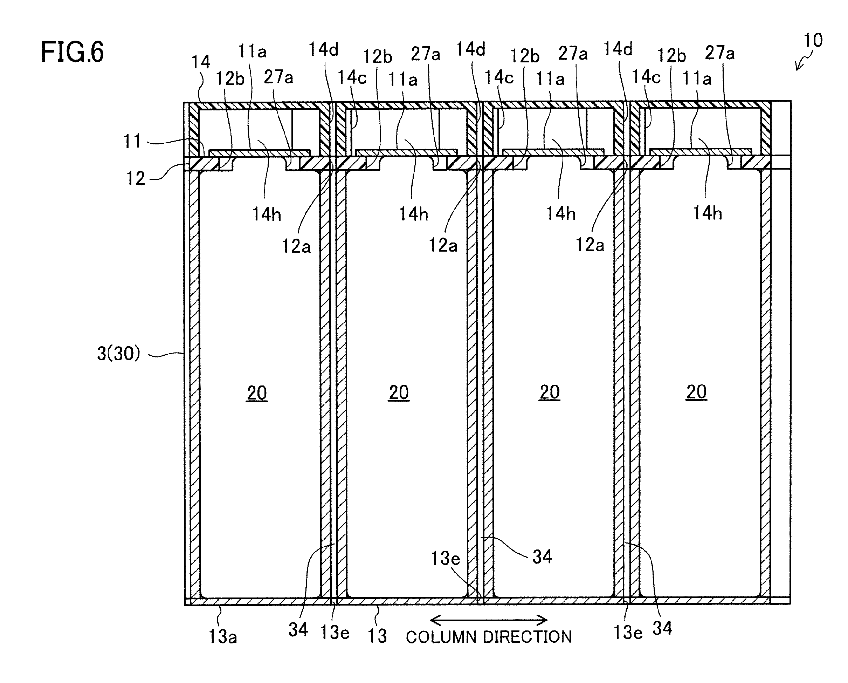

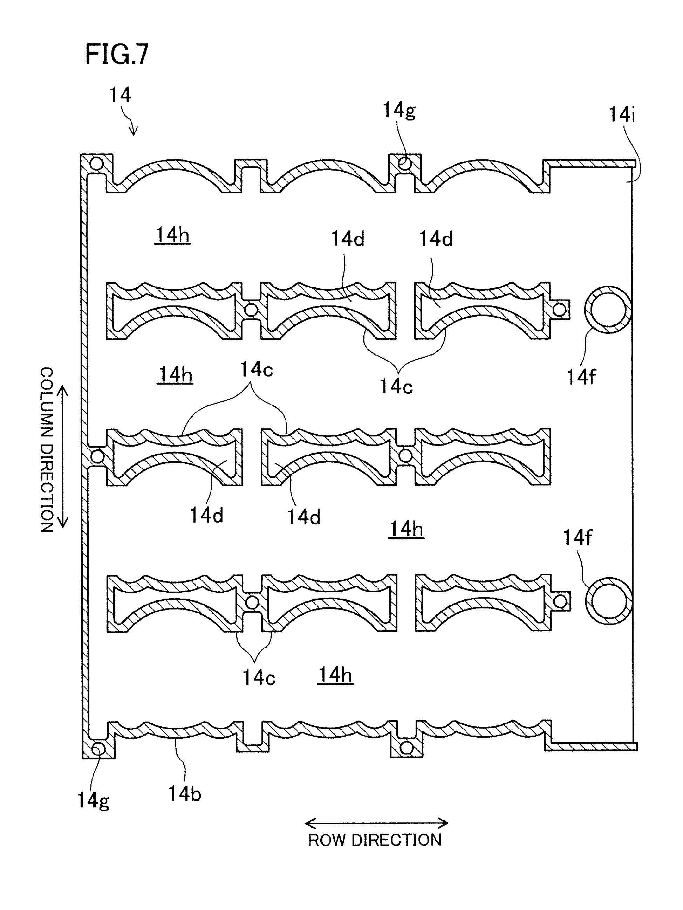

The battery unit 10 will be described below. FIG. 4 is a plan view of the battery unit 10 in which the positive electrode connector plate 11, the spacer 12, and the lid 14 are not shown. FIG. 5 shows a longitudinal cross-sectional view of the battery unit 10 taken along the line V-V of FIG. 4, FIG. 6 shows a longitudinal cross-sectional view of the battery unit 10 taken along the line VI-VI of FIG. 4, and FIG. 7 shows a bottom of the lid 14. In FIGS. 5 and 6, the cells 20 are depicted only by outlines.

The holder 3 has a holder body 30 including container portions 31 for containing the cells 20, respectively, pressing walls 33 for pressing the cells 20 contained in the container portions 31 toward inner circumferential walls of the container portions 31, respectively, refrigerant passages 34 provided in the holder body 30, and phase change elements 4 which are provided in the holder body 30, and change their phases from a solid phase to a liquid phase at a predetermined melting point. The pressing walls 33 constitute pressing portions, and the refrigerant passages 34 and the phase change elements 4 constitute temperature adjusting portions.

The holder body 30 is an extrusion-molded product made of an aluminum alloy, and is substantially in the shape of a rectangular parallelepiped. The holder body 30 includes 12 substantially circular cylindrical container portions 31 penetrating the holder body. The 12 container portions 31 are arranged in a matrix of four rows and three columns with their axes parallel to each other.

Specifically, the holder body 30 includes four column-wise walls 36 which extend in the column direction, and are aligned in the row direction. Between two adjacent column-wise walls 36, four pairs of a half-circular cylindrical wall 32 which is semicircular when viewed in transverse cr oss section, and a pressing wall 33 which faces the half-circular cylindrical wall 32 with an axis of the half-circular cylindrical wall 32 interposed therebetween are aligned in the column direction. Each of the container portions 31 is formed by a single pair of the half-circular cylindrical wall 32 and the pressing wall 33. Thus, the holder body 30 includes the container portions 31 arranged in a matrix of four columns and three columns.

An inner diameter the half-circular cylindrical wall 32 is substantially the same as an outer diameter of the cell 20. The pressing wall 33 includes a curved portion 33a which is curved in the same manner as the half-circular cylindrical wall 32, and coupling portions 33b for coupling circumferential ends of the curved portion 33a to circumferential ends of the half-circular cylindrical wall 32, respectively. The curved portion 33a is coaxial with the half-circular cylindrical wall 32, and has an inner diameter slightly smaller than the inner diameter of the half-circular cylindrical wall 32. The coupling portions 33b protrude outward from a virtual cylinder having the same axial center and inner diameter as those of the half-circular cylindrical wall 32, and are curved when viewed in transverse cross section. With the presence of the coupling portions 33b, the pressing wall 33 is likely to deform elastically in the radial direction.

The refrigerant passages 34 are provided between the container portions 31 adjacent to each other in the column direction. Specifically, each of the refrigerant passages 34 is formed by the half-circular cylindrical wall 32 of one of the container portions 31 adjacent to each other in the column direction, the pressing wall 33 of the other container portion 31, and the column-wise walls 36. The refrigerant passages 34 configured in this manner extend parallel to the axial direction of the container portions 31 to penetrate the holder body 30. In total, the holder body 30 includes three refrigerant passages 34 in each column, i.e., nine refrigerant passages 34 in total. The curved walls 32 are present at an end of the holder body 30 in the column direction, and the pressing walls 33 are present at the other end of the holder body 30 in the column direction. When the battery unit 10 is placed in the case 15, refrigerant passages (not shown) are additionally formed between the curved walls 32 and a sidewall 16b of a lower case 16, and between the pressing walls 33 at the ends of the holder body and the sidewall 16b of the lower case 16. Specifically, five refrigerant passages 34 are formed in each column of the holder body 30, i.e., three refrigerant passages 34 which are formed by pairs of the curved walls 32 and the pressing walls 33, a refrigerant passage which is formed at one end of the holder body in the column direction by the half-circular cylindrical wall 32 and the sidewall 16b of the lower case 16, and a refrigerant passage which is formed at the other end of the holder body by the pressing wall 33 and the sidewall 16b of the lower case 16.

The phase change elements 4 are arranged in housing cavities 35 formed in the column-wise walls 36, respectievly. Specifically, four housing cavities 35 are provided in each of the column-wise walls 36 to be aligned in the column direction. In total, sixteen housing cavities 35 are formed in the holder body 30. Each of the housing cavities 35 extends in parallel to the axial direction of the container portions 31 to penetrate the holder 3. The housing cavities 35 are arranged to be adjacent to the container portions 31. Each of the phase change elements 4 changes its phase from a solid phase to a liquid phase according to temperature. For example, the phase change element 4 may be made of a material containing water (35-50 weight percent, (wt. %)), sodium sulfate (30-50 wt. %), and sodium chloride (5-20 wt. %) as active ingredients, a material containing water (35-45 wt. %), and sodium acetate (44-65 wt. %) as the active ingredients, or a material containing water (30-45 wt. %), and trisodium phosphate (35-65 wt. %) as the active ingredients. These materials are compounds of salt and water. Therefore, they are less likely to be combusted even when exposed to high temperature than compounds containing an aromatic organic compound, organic acid, wax, alcohol, etc.

For example, the phase change element 4 may be made of ClimSel C28, ClimSel C48, ClimSel C58, ClimSel C70, etc., available from Climator Sweden AB.

Examples of the phase change element 4 may include a product containing paraffin wax, a compound of chlorobenzene and bromobenzene, a product containing stearic acid as the active ingredient, or containing stearic acid and esters such as methyl alcohol, propyl alcohol, butyl alcohol, etc., as the active ingredients. However, the phase change element 4 containing salt and water as the active ingredients as described above is preferable because it is less likely to be combusted.

The phase change element 4 may be made of a material which changes from the solid phase to the vapor phase like camphor, or a material which changes from the liquid phase to the vapor phase like water. However, since the phase change elements 4 are arranged in the housing cavities 35, a material which changes from the solid phase to the liquid phase, but does not change to the vapor phase in an estimated temperature range of the cell 20 is preferable because the volume of the phase change element does not change after the phase change.

Each of the phase change elements 4 is sealed in a laminate or aluminum foil, and is arranged in the housing cavity 35. The phase change element 4 may directly be arranged in the housing cavity 35. In this case, aluminum foil may be welded to the holder 3 to seal the ends of the housing cavity 35. When the phase change element 4 may possibly change to the vapor phase, the aluminum foil may be scored in such a manner that the aluminum foil breaks when the internal pressure in the housing cavity 35 increases too much.

The temperature at which the phase change element 4 changes the phase (i.e., a melting point) is in an allowable temperature range of the cell 20, and is slightly lower than a maximum allowable temperature of the cell 20. The maximum allowable temperature is a temperature at which the probability of the internal short circuit in the cell 20 is high. Specifically, a certain operating temperature range in which the cell 20 can show intended performance is predetermined. In addition, a storage temperature for the cell 20 is predetermined which is higher than maximum operating temperature, and at which the cell is less likely to reduce its performance even after a long time storage period. The cell 20 is more likely to cause an internal short circuit at maximum allowable temperature which is higher than the storage temperature.

Pilot holes 36a for tapping screws are formed in each of the column-wise walls 36. Each of the pilot holes 36a penetrates the wall 36 in a direction parallel to the axial direction of the container portion 31. Each of the pilot holes 36a is provided with a slit extending in the axial direction thereof.

With the holder 3 configured in this way, the cell 20 is inserted in the container portion 31 from an axial end of the container portion 31 to the other axial end of the container portion 31 to be coaxial with the container portion 31. The curved portion 33a of the pressing wall 33 is positioned inward of the virtual circumference having the same axis and inner diameter as those of the half-circular cylindrical wall 32. In this state, the curved portion 33a interferes with the insertion of the cell 20. Thus, the pressing wall 33 is elastically deformed radially outward to increase space in the container portion 31 to receive the cell 20 in the container portion 31. Then, the cell 20 contained in the container portion 31 is elastically pressed by the pressing wall 33, and the outer circumferential surface of the cell is brought into close contact with the inner circumferential surface of the container portion 31. The inner diameter of the curved portion 33a of the pressing wall 33 is smaller than the outer diameter of the cell 20. However, in placing the cell 20 in the container portion 31, the curved portion 33a is elastically deformed, and the inner circumferential surface of the curved portion 33a is brought into close contact with the outer circumferential surface of the cell 20.

The negative electrode connector plate 13 is a plate-shaped member made of a nickel plate, a nickel-plated steel plate, etc., and has a substantially rectangular bottom 13a, and a connecting portion 13b which vertically extends from one of sides of the bottom 13a. A plurality of holes 13f are formed in the bottom 13a of the negative electrode connector plate 13 to penetrate the bottom 13a. The holes 13f are positioned to correspond with the pilot holes 36a formed in the holder 3. The bottom 13a of the negative electrode connector plate 13 is fixed to an end of the holder 3 in the axial direction of the container portions 31 by tapping screws inserted in the holes 13f. The axial end is an end of the holder where the bottoms of the battery cases 22 are positioned when the cells 20 are placed in the container portions 31. Openings 13e of the same shape as the refrigerant passages 34 of the holder 3 are formed in the bottom 13a to penetrate the bottom 13a. The openings 13e communicate with the refrigerant passages 34 of the holder 3 when the negative electrode connector plate 13 is attached to the holder 3. The container portions 31 and the housing cavities 35 are sealed with the bottom 13a of the negative electrode connector plate 13 when the negative electrode connector plate 13 is attached to the holder 3. The bottom 13a of the negative electrode connector plate 13 and the bottoms of the battery cases 22 of the cells 20 are spot-welded. The connecting portion 13b vertically extends from one of a pair of sides of the bottom 13a extending in the column direction. An end of the connecting portion 13b is bent to constitute a negative electrode terminal tab 13c extending parallel to the bottom 13a. The bottom 13a and the negative electrode terminal tab 13c extend in opposite sides relative to the connecting portion 13b. Two through holes 13d are formed in the negative electrode terminal tab 13c to be aligned in the column direction.

The spacer 12 is substantially in the same shape as the negative electrode connector plate 13. Specifically, the spacer 12 is a substantially rectangular plate-shaped member. The spacer 12 is made of, for example, an insulator such as an insulating aramid sheet, a glass epoxy sheet, etc. The spacer 12 is arranged at the other end of the holder 3 in the axial direction of the container portion 31. A plurality of holes 12c for receiving the tapping screws are formed in the spacer 12 to penetrate the spacer 12. When the lid 14 is attached to the holder 3 by the tapping screws, the spacer 12 is attached together with the lid 14. The holes 12c are positioned to correspond with the pilot holes 36a of the holder 3. The spacer 12 is provided with openings 12a having the same shape as the refrigerant passages 34 of the holder 3, and through holes 12b each having a larger diameter than the protrusion 27a of the positive electrode terminal of the cell 20 placed in the container portion 31. When the spacer 12 is attached to the holder 3, the openings 12a communicate with the refrigerant passages 34 of the holder 3, and the through holes 12b communicate with the container portions 31 of the holder 3. In this state, the protrusions 27a of the cells 20 placed in the container portions 31 do not contact the spacer 12, but are positioned within the through holes 12b. The openings of the housing cavities 35 of the holder 3 are sealed with the spacer 12 attached to the holder 3. That is, an end of each of the housing cavities 35 is sealed with the negative electrode connector plate 13, and the other end of each of the housing cavities 35 is sealed with the spacer 12.

The positive electrode connector plate 11 is a plate-shaped member made of a nickel plate, a nickel-plated steel plate, etc., and includes disc portions 11a which are arranged in a matrix of four rows and three columns like the container portions 31, and contact the protrusions 27a of the positive electrode terminals of the cells 20, row-wise connectors 11b which connect the disc portions 11a in the row direction, column-wise connectors 11c which connect the row-wise connectors 11b in the column direction, and a positive electrode terminal tab 11d which is arranged outside the four disc portions 11a located at an end of the positive electrode connector plate in the row direction. Each of the row-wise connectors 11b connects three disc portions 11a in the row direction. The row-wise connectors 11b are wider than the column-wise connectors 1 1c. The disc portions 11a of the positive electrode connector plate 11 are spot-welded to the protrusions 27a of the cells 20 placed in the container portions 31 of the holder 3. Four arc-shaped through holes 11e are formed in each of the disc portions 11a to surround its center which contacts the protrusion 27a of the cell 20. When viewed in plan, the positive electrode terminal tab 11d protrudes from the holder 3 to one side in the row direction. T wo through holes 11f are formed in the positive electrode terminal tab 11 d to be aligned in the column direction.

The lid 14 is made of an aluminum alloy, and includes a top plate 14a, a peripheral wall 14b provided on the periphery of the top plate 14a, and passage walls 14c forming refrigerant passages 14d. The top plate 14a is substantially rectangular, and is substantially in the same shape as the negative electrode connector plate 13. The peripheral wall 14b is provided on three of four sides of the top plate 14a. The shape of the peripheral wall 14b correspond with the outer shape of the spacer 12. Specifically, the peripheral wall 14b is provided on a pair of sides of the top plate 14a extending in the row direction, and one of a pair of sides of the top plate 14a extending in the column direction. That is, the lid 14 is surrounded by the peripheral wall 14b on three sides, and is opened on one side. The open side of the lid 14 constitutes a gas discharge port 14i through which gas generated due to the abnormal heat generation by the cell is discharged. When viewed in plan, the lid 14 protrudes from the holder 3 to the one side in the row direction. From the top plate 14a, nine cylindrical passage walls 14c extend in the same direction as the peripheral wall 14b extends. Refrigerant passages 14d are formed in the passage walls 14c. The refrigerant passages 14d have the same inner dimension as that of the refrigerant passages 34 of the holder 3. When the lid 14 is attached to the holder 3, the refrigerant passages 14d communicate with the openings 12a of the spacer 12 and the refrigerant passages 34 of the holder 3. Two circular cylindrical walls 14f are provided near the discharge port 14i of the lid 14 to extend from the top plate 14a in the same direction as the peripheral wall 14b extends. As described later in detail, bolts for connecting the positive electrode connector plate 11 of one of two adjacent battery units 10 to the negative electrode connector plate 13 of the other battery unit are inserted in the circular cylindrical walls 14f. A plurality of holes 14g for receiving the tapping screws are formed in the lid 14 to penetrate the lid 14. The holes 14g are positioned to correspond with the pilot holes 36a of the holder 3. With the spacer 12 sandwiched between the lid 14 and the holder 3, the lid 14 is fixed to the holder 3 by the tapping screws inserted in the holes 14g. In this state, the peripheral wall 14b and the ends of the passage walls 14c of the lid 14 are in contact with the spacer 12. In the present embodiment, the peripheral wall 14b and the passage walls 14c are not in contact with the positive electrode connector plate 11 provided on the spacer 12. Although not shown, insulators are provided at the ends of the circular cylindrical walls 14f, and the circular cylindrical walls 14f are in contact with the positive electrode terminal tab 11b of the positive electrode connector plate 11 through the insulators. Thus, the lid 14 and the positive electrode connector plate 11 are electrically insulated.

With the lid 14 attached to the holder 3 in this way, each of the refrigerant passages 14d of the lid 14 communicates with the opening 12a of the spacer 12, the refrigerant passage 34 of the holder 3, and the opening 13e of the negative electrode connector plate 13. thereby forming a single refrigerant passage.

With the lid 14 attached to the holder 3, discharge rooms 14h are formed between the lid 14 and the spacer 12. The discharge rooms 14h are substantially divided by the passage walls 14c of the lid 14 in the column direction. Specifically, four discharge rooms 14h are formed to extend in the row direction. The discharge rooms 14h are opened outside through the discharge port 14i provided on the one side in the row direction.

High temperature gas is discharged to the discharge rooms 14h from the cell 20 which abnormally generated heat. Specifically, the high temperature gas is discharged from the cell 20 when an internal short circuit occurs in the cell 20. The gas discharged from the cell 20 enters the discharge room 14h through the through holes 12b of the spacer 12, and the through holes 11e of the positive electrode connector plate 11. The gas flows through the discharge room 14h, and is discharged outside the lid 14 from the discharge port 14i.

The four battery units 10 configured in this manner are placed in the case 15. The case 15 includes a lower case 16, and an upper case 17.

The lower case 16 includes a substantially rectangular bottom plate 16a, a peripheral wall 16b vertically extending from four sides of the bottom plate 16a, and divider walls 16c which divide space in the lower case 16 into four rooms. The four battery units 10 are placed in the rooms of the lower case 16, respectively. The battery units 10 are placed in the lower case 16 in such a manner that the positive electrode terminal tab 11b of the positive electrode connector plate 11 of one of the battery units 10 is adjacent to the negative electrode terminal tab 13c of the negative electrode connector plate 13 of the adjacent battery unit 10. The positive electrode terminal tab 11b of one of the adjacent battery units 10 and the negative electrode terminal tab 13c of the other battery unit 10 are stacked on an end face of the divider wall 16c of the lower case 16. In this state, the through holes 11f of the positive electrode terminal tab 11b communicate with the through holes 13d of the negative electrode terminal tab 13c. Although not shown, insert nuts are provided on the end faces of the divider walls 16c. The insert nuts are positioned in the through holes 11 f of the positive electrode terminal tab 11b, and the through holes 13d of the negative electrode terminal tab 13c. The bolts are inserted in the through holes 11f of the positive electrode terminal tab 11b, and the through holes 13d of the negative electrode terminal tab 13c via the circular cylindrical walls 14f of the lid 14, and are screwed into the insert nuts. Thus, the positive electrode terminal tab 11b and the negative electrode terminal tab 13c are fixed to the divider wall 16c by the bolts.

Openings 16d communicating with the refrigerant passages of the battery unit 10 are formed in the bottom plate 16a of the lower case 16 to penetrate the bottom plate 16a. Specifically, when the battery unit 10 is placed in the room of the lower case 16, and is fixed to the divider wall 16c by the bolts, the openings 13e of the negative electrode connector plate 13 of the battery unit 10 communicate with the openings 16d of the lower case 16.

The upper case 17 includes a substantially rectangular top plate 17a, a peripheral wall 17b extending downward from four sides of the top plate 17a, and cylindrical passage walls 17c extending downward from the top plate 17a. The upper case 17 is fixed to the lower case 16 by the bolts. Ends of the passage walls 17c are in contact with the lid 14 of the battery unit 10. Refrigerant passages 17d are formed in the passage walls 17c, respectively. The refrigerant passages 17d penetrate the top plate 17a. The refrigerant passages 17d communicate with the refrigerant passages of the battery unit 10. Specifically, when the upper case 17 is attached to the lower case 16, the refrigerant passages 14d of the lid 14 of the battery unit 10 communicate with the refrigerant passages 17d of the upper case 17.

A discharge port 17e for discharging gas discharged from the cell 20 outside the case 15 is formed in the peripheral wall 17b of the upper case 17 to penetrate the peripheral wall 17b. Specifically, the gas discharged from the cell 20 passes through the discharge room 14h formed by the lid 14, and is discharged from the battery unit 10 to the inside of the case 15 through the discharge port 14i. The gas in the case 15 passes through the space between the battery units 10 and the upper case 17, and is discharged outside the case 15 through the discharge port 17e.

The positive electrode terminal tab 11b of one of the four battery units 10 at an end of the battery module is longer than the positive electrode terminal tabs 11b of the other battery units 10, and is inserted between end faces of the lower case 16 and the upper case 17 joined to each other to protrude outside the case 15. The negative electrode terminal tab 13c of one of the four battery units 10 at the other end of the battery module is longer than the negative electrode terminal tabs 13c of the other battery units 10, and is inserted between end faces of the lower case 16 and the upper case 17 joined to each other to protrude outside the case 15.

The battery module 1 configured in this manner is placed on a floor 18 of a chassis. A plurality of air guiding grooves 18a (only one of them is shown in FIG. 1) are formed on a surface of the floor 18. A fan 18b is provided at an end of the air guiding grooves 18a. The fan 18b introduces air to the air guiding grooves 18a. The battery module 1 is placed on the floor 18 with the openings 16d of the lower case 16 positioned above the air guiding grooves 18a. Thus, the air introduced to the air guiding grooves 18a by the fan 18b flows into the refrigerant passages of the battery units 10 through the openings 16d of the lower case 16, passes through the refrigerant passages 17d of the upper case 17, and is discharged outside the case 15. A means for introducing the air to the air guiding grooves 18a is not limited to the fan 18b. The air from an air conditioner of the vehicle (not shown) may be introduced to the air guiding grooves 18a through a duct.

The cells 20 are heated through charges and discharges, but are cooled by the air passing through the refrigerant passages of the battery units 10. Specifically, the heat generated by the cell 20 is conducted to the holder 3 holding the cells 20. The heat conducted to the holder 3 is conducted through the holder 3, and is conducted to the refrigerant passing through the refrigerant passages 34. When the temperature and flow rate of the air introduced by the fan 18b are adjusted, the amount of heat conducted from the cells 20 to the refrigerant can be adjusted. When a temperature sensor for sensing the temperature of the cells 20 is provided, the temperature and flow rate of the air can be adjusted based on the sensed temperature, and the temperature of the cells 20 can be adjusted to the intended temperature. For example, the temperature sensor may be provided in the container portion 31 of the holder 3, i.e., at the coupling portion 33b of the pressing wall 33, or the outer circumferential surface of the battery case 22 of the cell 20.

In the present embodiment, the cell 20 is in close contact with the half-circular cylindrical wall 32 due to pressure applied by the pressing wall 33. In addition, the curved portion 33a of the pressing wall 33 is elastically deformed to be close contact with the outer circumferential surface of the cell 20. Thus, the heat of the cell 20 is efficiently conducted to the holder 3. Since the holder 3 is made of metal, the heat conducted from the cell 20 to the holder 3 is efficiently conducted to the refrigerant passages 34 through the holder 3. With thermal resistance from the cell 20 to the refrigerant reduced in this way, the heat of the cell 20 can efficiently be transferred to the refrigerant. The half-circular cylindrical wall 32 and the pressing wall 33 which are in close contact with the cell 20 are walls forming the refrigerant passage 34. Thus, a distance through which the heat is conducted from the cell 20 to the refrigerant is significantly short, i.e., the thermal resistance between the cell 20 and the refrigerant is significantly low. Specifically, the heat conducted from the cell 20 to the half-circular cylindrical wall 32 through an inner circumferential surface of the half-circular cylindrical wall 32 is transferred from the outer circumferential surface of the half-circular cylindrical wall 32 to the refrigerant passing through the refrigerant passage 34. Likewise, the heat conducted from the cell 20 to the pressing wall 33 through the inner circumferential surface of the curved portion 33a of the pressing wall 33 is transferred from the outer circumferential surface of the pressing wall 33 to the refrigerant passing through the refrigerant passage 34. Thus, the heat of the cell 20 can more efficiently be transferred.

When the cell 20 generates the gas due to the internal short circuit as described above, the cell 20 itself is heated. The cell 20 is also heated when the cell 20 is overcharged, or is charged/discharged at a large current. In this case, the cell 20 is cooled by the refrigerant passing through the refrigerant passages 34. However, unlike the normal operation, the heat abnormally generated by the cell 20 cannot be absorbed only by the refrigerant passing through the refrigerant passages 34. Further, when the heat abnormally generated by the cell 20 is transferred to the other cells 20, the cells 20 which do not abnormally generate heat are also heated. In the configuration of the present embodiment including the plurality of cells 20 held by the holder 3, the plurality of cells 20 are thermally connected through the holder 3. Therefore, the heat transfer from the cell 20 which experienced the abnormal heat generation to the other cells 20 is a major concern. In the present embodiment, the heat of the cell 20 is absorbed by the phase change elements 4 provided in the holder 3. Specifically, the heat conducted from the cell 20 to the holder 3 is conducted through the holder 3, and is conducted not only to the refrigerant passages 34, but also to the phase change elements 4. The phase change elements 4 which received the heat are heated, and changes from a solid phase to a liquid phase when the temperature of the phase change elements 4 increased to a melting point. The phase change elements 4 absorb more heat as latent heat (heat of melting). Thus, as compared with a configuration in which heat is absorbed by an element which does not change the phase even when it receives the abnormally generated heat of the cell 20, more heat can be absorbed in the battery unit 10 of the present embodiment by the phase change elements 4. Thus, the heat abnormally generated by the cell 20 is absorbed, and the temperature increase of the other cells 20 can be reduced. When the amount of heat generated by the cell 20 is short of an amount of heat which allows all the phase change elements 4 to change their phases completely, the temperature of the cells 20 can be kept to the melting point of the phase change elements 4 or lower. Specifically, when the phase change elements 4 are changing their phases, the temperature is substantially constant. Therefore, when the temperature of the phase change elements 4 reaches the melting point, the temperature is kept at the melting point, and the temperature increase from the melting point is less likely to occur. The melting point of the phase change elements 4 of the present embodiment is set to be the maximum allowable temperature of the cell 20 or lower. Therefore, when the amount of heat generated by the cell 20 is the amount of heat which allows the complete phase change of the phase change elements or smaller, the temperature of the cells 20 can be kept at the maximum allowable temperature or lower.

In general, the abnormal heat generation does not occur simultaneously in all the cells 20, but occurs accidentally in one or some of the cells 20. The phase change elements 4 in the holder 3 are arranged not only around the cell 20 which abnormally generated heat, but also around the other cells 20. Since the holder 3 and the cells 20 are thermally connected, the holder 3 is also thermally connected to the cell 20 which experienced the abnormal heat generation, and the phase change elements 4 arranged around the other cells 20 which did not experience the abnormal heat generation. Specifically, the heat abnormally generated by the cell 20 is absorbed not only by the phase change elements 4 around the cell 20, but also by the phase change elements 4 around the other cells 20 which did not experience the abnormal heat generation. In other words, the heat abnormally generated by the cell 20 can be absorbed by all the phase change elements 4 arranged in the holder 3. Thus, the temperature increase in the cell 20 which experienced the abnormal heat generation can reliably be reduced, and the temperature increase in the other cells 20 can also reliably be reduced.

As described above, the cell 20 is in close contact with the half-circular cylindrical wall 32 due to pressure applied by the pressing wall 33. Further, the curved portion 33a of the pressing wall 33 is elastically deformed to be close contact with the outer circumferential surface of the cell 20. Thus, the heat of the cell 20 can efficiently be conducted to the holder 3. Since the holder 3 is made of metal, the heat conducted from the cell 20 to the holder 3 is efficiently conducted to the phase change elements 4. Therefore, the heat of the cell 20 can efficiently be transferred to the phase change elements 4 by reducing the thermal resistance from the cell 20 to the phase change elements 4 in this way.

According to the present embodiment, the cell 20 is pressed to the half-circular cylindrical wall 32 by the pressing wall 33 of the holder 3 to bring the outer circumferential surface of the cell 20 into close contact with the inner circumferential surface of the half-circular cylindrical wall 32. This can reduce thermal resistance between the cell 20 and the holder 3, thereby efficiently conducting the heat of the cell 20 to the holder 3. Since the holder 3 made of metal is reduced in thermal resistance, the heat conducted from the cell 20 to the holder 3 can efficiently be conducted to the refrigerant passages 34 through which the refrigerant passes, and to the phase change elements 4. In this way, the heat of the cell 20 efficiently conducted to the refrigerant or the phase change elements 4, and the temperature of the cell 20 can efficiently and responsively be adjusted. Further, the heat abnormally generated by one of the cells 20 can efficiently and quickly be absorbed by the phase change elements 4 arranged around the cell 20, and the phase change elements 4 arranged around the other cells 20.

In addition, the cell 20 can be held securely by the half-circular cylindrical wall 32 and the pressing wall 33. In particular, when the battery module 1 is mounted on an automobile, vibration of the automobile may affect the battery module. However, with the cells 20 securely held by the holder 3, the battery module can be resistant to the vibration.

With the pressing wall 33 partially curved to bring it into close contact with the cell 20, a contact area between the cell 20 and the holder 3 can be increased, thereby reducing the thermal resistance between the cell 20 and the holder 3, and efficiently conducting the heat of the cell 20 to the holder 3.

Since the refrigerant passage 34 is formed by the half-circular cylindrical wall 32 and the pressing wall 33 which are in close contact with the cell 20, the thermal resistance between the cell 20 and the refrigerant can further be reduced. Specifically, the cell 20 contacts the inner circumferential surface of the half-circular cylindrical wall 32, and the refrigerant contacts the outer circumferential surface of the half-circular cylindrical wall 32. Thus, the heat of the cell 20 is conducted merely through a thickness of the half-circular cylindrical wall 32. This allows efficient conduction of the heat of the cell 20 to the refrigerant.

With the refrigerant passage 34 formed by the half-circular cylindrical wall 32 and the pressing wall 33, the container portion 31 of the cell 20 and the refrigerant passage 34 can be separated. Thus, direct contact between the cell 20 and the refrigerant can be prevented. This can prevent corrosion of the outer surface of the cell 20 by the refrigerant, or penetration of the refrigerant in the cell 20. With the passage walls 14c provided in the lid 14, the refrigerant passing through the refrigerant passages 34 of the holder 3 can pass through the refrigerant passages 14d formed by the passage walls 14c without flowing to the space between the spacer 12 and the lid 14. Further, the positive electrode connector plate 11 is arranged in the space between the spacer 12 and the lid 14 so as not to contact the passage walls 14c. Thus, direct contact between the positive electrode connector plate 11 and the refrigerant can be prevented. This can prevent corrosion of the positive electrode connector plate 11 (in particular, part of the positive electrode connector plate 11 in contact with the cell 20) by the refrigerant. With the negative electrode connector plate 12 sandwiched between the holder 3 and the bottom plate 16a of the lower case 16, and the openings 13e formed in the negative electrode connector plate 12 to communicate with the refrigerant passages 34 of the holder 3 and the openings 16d of the bottom plate 16a, the refrigerant is prevented from contacting the negative electrode connector plate 12 except for the end faces of the openings 13e. Thus, at least part of the negative electrode connector plate 12 in contact with the cell 20 is prevented from corrosion caused by the refrigerant. To completely prevent the corrosion of the negative electrode connector plate 12 by the refrigerant, the end faces of the openings 13e are preferably coated with resin, e.g., a urethane coating.

In the above-described configuration, the plurality of cells 20 are thermally connected through the holder 3, and the thermal resistance between the cell 20 and the holder 3, and the thermal resistance of the holder 3 are reduced. This allows efficient conduction of heat from the high temperature cell 20 to the low temperature cell 20, and makes the temperatures of the cells 20 uniform.

With the phase change elements 4 provided in the holder 3, thermal capacity of the holder 3 per volume can be increased. Specifically, the holder 3 and the phase change elements 4 can absorb more heat of the cells 20. Thus, even when the heat is abnormally generated in one or some of the cells 20, temperature increase in the other cells 20 can be reduced. With the presence of the phase change elements 4, the temperature of the cells 20, if increases to a phase change temperature at which the phase change elements 4 change the phase, can be kept at the phase change temperature until the phase change elements 4 completely change to the liquid phase.

With the pressing wall 33 integrated with the holder body 30, the number of steps for assembling the holder 3 can be reduced.

Since the heat abnormally generated by the cell 20 is absorbed by the phase change elements 4, transfer of the abnormally generated heat to the normal cells 20 which did not abnormally generate heat can be prevented, and the normal cells 20 are not abnormally heated.

Since the phase change elements 4 are used to absorb the heat abnormally generated by the cell 20, thermal capacity per volume can be increased, and more heat can be absorbed. Specifically, the phase change element 4 absorbs more heat as latent heat when it changes the phase. Thus, as compared with an element which does not change the phase, the phase change elements 4 can absorb more heat. This can downsize the holder 3 in which the phase change elements 4 are arranged, and can downsize the battery module 1.

Since the phase change elements 4 are used to absorb the heat abnormally generated by the cell 20, temperature increase in the holder 3 and the other cells 20 can be reduced. When the heat absorption is performed by a member which does not change the phase, temperature of the member increases as the member absorbs heat. In contrast, the temperature of the phase change element 4 increases as the phase change element absorbs heat until the temperature reaches the melting point. Then, once the temperature reaches the melting point, the temperature of the phase change element 4 is kept substantially at the melting point until it completely changes from the solid phase to the liquid phase. Even when the temperature of the cell 20 which experienced the abnormal heat generation increases, the temperature of the holder 3 and the other normal cells 20 can be kept at substantially the same temperature as the melting point of the phase change element 4.

Since the phase change elements 4 change from the solid phase to the liquid phase (i.e., does not change to the vapor phase) in the estimated range of temperature change of the cell 20, the phase change elements 4 can be used repeatedly. Specifically, the volume of the phase change element hardly changes, or slightly changes through the phase change between the solid phase and the liquid phase. Thus, leakage of the phase change elements 4 from the housing cavities 35 of the holder 3 can be prevented. When the abnormal heat generation by the cell 20 stops, and the temperature of the cell 20 decreases, the temperatures of the holder 3 and the phase change elements 4 also decrease. Since the holder 3 is not damaged by, e.g., leakage of the phase change elements 4, the holder 3 returns to the state before the abnormal heat generation. Thus, the phase change elements 4 can get ready for the next abnormal heat generation.

Since the phase change elements 4 are not in contact with the cells 20, the phase change elements 4 changed to the liquid phase do not adversely affect the cells 20. Specifically, when the phase change elements 4 and the cells 20 are in contact with each other, the phase change element 4 in the liquid phase may corrode the outer surface of the cell 20, may penetrate into the cell 20, or may cause an external short circuit of the cell 20. In contrast, according to the present embodiment, the phase change elements 4 and the cells 20 are not in contact with each other, and the cells 20 can be protected from the phase change elements 4 in the liquid phase. With this configuration, the phase change elements 4 and the cells 20 are thermally connected through the holder 3, and the heat can efficiently be conducted between the cells 20 and the phase change elements 4.

### [Second Embodiment]

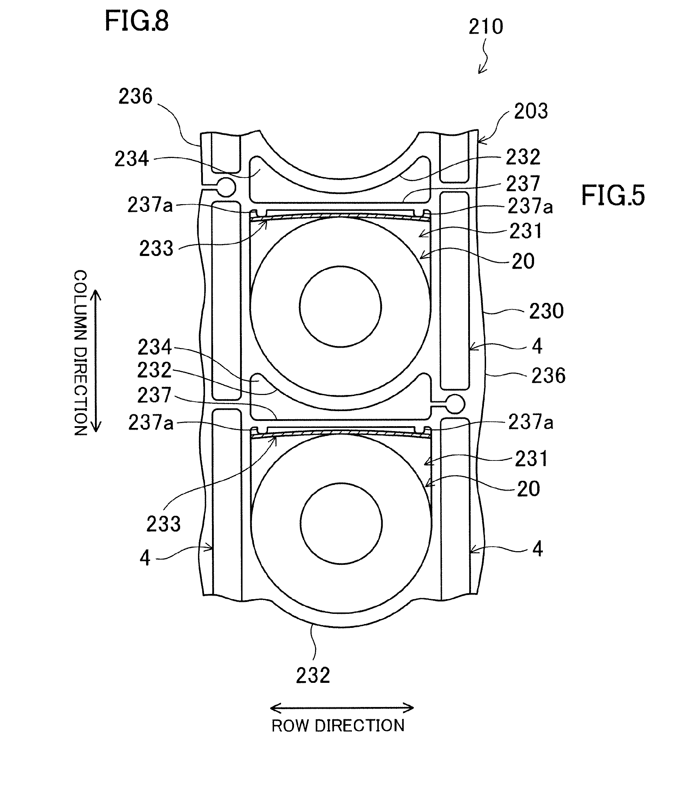

A second example embodiment of the present invention will be described below. FIG. 8 is an enlarged plan view illustrating part of a battery unit 210 in which a positive electrode connector plate 11, a spacer 12, and a lid 14 are not shown.

The battery unit 210 of the second embodiment includes a holder 203 having a structure different from that of the holder of the first embodiment. The same components as those of the first embodiment will be indicated by the same reference characters, and the difference between the second and first embodiments will be described below.

The holder 203 includes a holder body 230 including container portions 231 containing the cells 20, respectively, pressing plates 233 for pressing the cells 20 contained in the container portions 231 toward inner circumferential walls of the container portions 231, respectively, refrigerant passages 234 provided in the holder body 230, and phase change elements 4 which are provided in the holder body 230, and change their phases from a solid phase to a liquid phase at a predetermined melting point. The pressing plates 233 constitute pressing portions, and the refrigerant passages 234 and the phase change elements 4 constitute temperature adjusting portions.

The holder body 230 is an extrusion-molded product made of an aluminum alloy, and is substantially in the shape of a rectangular parallelepiped. The holder body 230 includes four column-wise walls 236 which extend in the column direction, and are aligned in the row direction (only two of them are shown in FIG. 8). Between two adjacent column-wise walls 236, four pairs of a curved wall 232 which is semicircular when viewed in transverse cross section, and a flat wall 237 which faces the curved wall 232 with an axis of the curved wall interposed therebetween are aligned in the column direction. Each of the container portions 231 is formed by a single pair of the curved wall 232 and the flat wall 237. Thus, the holder body 230 includes the container portions 231 arranged in a matrix of four rows and three columns. Protrusions 237a extending in an axial direction of the container portions 231 are formed on a surface of each of the flat walls 237 facing the container portion 231. The two protrusions 237a are provided at respective ends of the flat wall 237 in the row direction.

The refrigerant passage 234 is formed by the curved wall 232 of one of two container portions 231 adjacent to each other in the column direction, the flat wall 237 of the other container portion 231, and the column-wise walls 236.

The pressing plate 233 is a plate-shaped member made of spring steel. The pressing plate 233 is arranged in the container portion 231 to be in contact with the protrusions 237a of the flat wall 237. In this state, the pressing plate 233 overlaps with a virtual circumference having the same axis and inner diameter as those of the curved wall 232

The cell 20 is inserted in each of the container portions 231 in the axial direction from an axial end of the container portion 231 to be coaxial with the container portion 231. In this state, the pressing plate 233 is positioned inward of the virtual circumference having the same axis and inner diameter as those of the curved wall 232, and the cell 20 cannot be placed in the container portion 231. Thus, the center of the pressing plate 233 in the row direction is elastically deformed toward the flat wall 237 to increase space of the container portion 231, and then the cell 20 is placed in the container portion 231. The cell 20 contained in the container portion 231 is elastically pressed by the pressing plate 233, and an outer circumferential surface of the cell is brought into close contact with an inner circumferential surface of the curved wall 232 of the container portion 231.

In this embodiment, the cell 20 is pressed onto the curved wall 232 by the pressing plate 233 of the holder 203, thereby bringing the outer circumferential surface of the cell 20 into contact with the inner circumferential surface of the curved wall 232. This can reduce thermal resistance between the cell 20 and the holder 203, and allows efficient conduction of heat from the cell 20 to the holder 203. Further, since the holder 203 is made of metal, the thermal resistance of the holder 203 itself is reduced. This allows efficient conduction of the heat transferred from the cell 20 to the holder 203 to the refrigerant passages 234 through which the refrigerant passes, and to the phase change elements 4. Thus, the heat of the cell 20 can efficiently be transferred to the refrigerant and the phase change elements 4, and the temperature of the cell 20 is efficiently and responsively adjusted. The heat abnormally generated by one of the cells 20 can efficiently and quickly be absorbed by the phase change elements 4 arranged around the cell 20, and the phase change elements 4 arranged around the other cells 20.

With the holder body 230 and the pressing plate 233 configured as separate parts, both of them can be designed for their own functions. For example, the holder body 230 is made of an aluminum alloy in view of thermal conductivity, and the pressing plate 233 is made of spring steel in view of elasticity.

### [Other Embodiments]

The first and second embodiments may be modified in the following manner.

For example, the cells 20 are not limited to the general 18650 batteries. The cells 20 are not limited to the lithium ion secondary batteries. The cells 20 are not limited to the round columnar cells, but may be, for example, square columnar cells. The cells 20 may not be columnar. Likewise, the container portions 231 of the holder 3, 203 are not limited to be circular cylindrical, and may be cylindrical having a polygonal section.

The number of the cells 20, and the number of the battery units 10, 210 are not limited to those described in the embodiments. F or example, the number of the battery unit 10 may be 1, i.e., the battery unit 10 may constitute the battery module 1 as it is.

The phase change elements 4 may be any member as long as it changes from a solid phase to a liquid phase in the estimated range of temperature increase of the cell 20, and it does not change from the liquid phase to a vapor phase.

The phase change elements 4 are arranged in the holder 3, 203 to be positioned on four sides of each cell 20. However, the arrangement of the phase change elements 4 is not limited thereto. Specifically, as long as the phase change elements 4 are arranged in the holder 3, 203, the phase change elements 4 are thermally connected to the cells 20 through the holder 3, 203, and absorb the heat of the cells 20. Thus, the phase change elements 4 are not necessarily arranged around the cells 20, but may be arranged away from the cells 20. It is not always necessary that the same number of the phase change elements 4 are arranged for each cell 20. For example, after the cells 20 are arranged in the holder 3, the phase change elements 4 may be arranged to fill the remaining space. However, in view of efficient heat absorption from the cells 20, the phase change elements 4 are preferably arranged near the cells 20 as many as possible.

The holder 3, 203 is made of an aluminum alloy. However, the material of the holder is not limited thereto. For example, the holder 3 may be made of metal except for the aluminum alloy. Alternatively, the holder 3 may be made of highly thermally conductive resin. Examples of the highly thermally conductive resin include, for example, resin containing fused silica, e.g., epoxy resin (having a thermal conductivity of about 12×10⁻⁴ cal/cm·sec·deg), resin containing alumina (having a thermal conductivity of about 40×10⁻⁴ cal/cm·sec·deg), resin containing crystallized silica (having a thermal conductivity of about 35×10⁻⁴ cal/cm·sec·deg), resin containing aluminum nitride (having a thermal conductivity of about 40×10⁻⁴ cal/cm·sec·deg), etc.

The cells 20 in the above-described battery module 1 are air-cooled. However, the cells may be liquid-cooled. For example, a liquid-cooling jacket communicating with the refrigerant passages of the battery unit 10 may be provided to distribute water in the refrigerant passages of the battery unit 10.

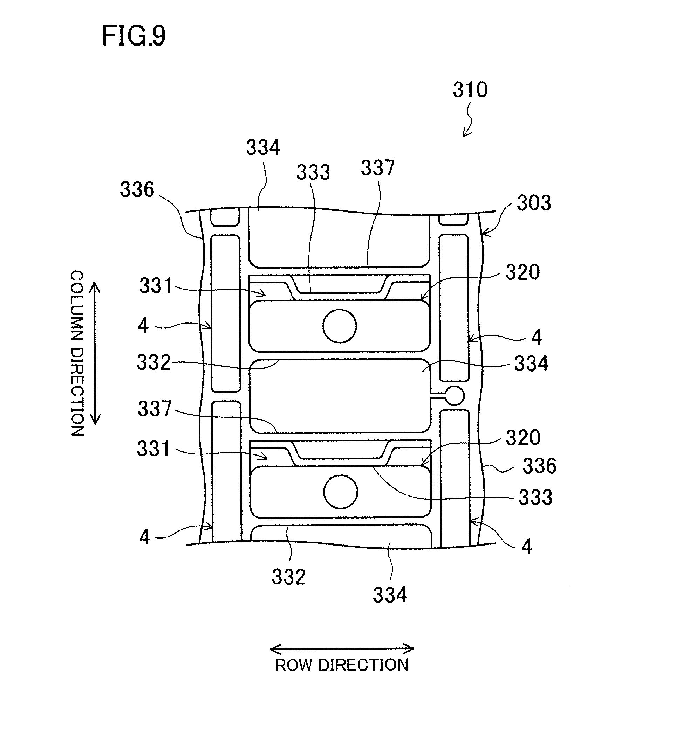

The cells 20 are not limited to the round columnar cells. For example, as shown in FIG. 9, plate-shaped cells 320 may also be used. The cells 320 are plate-shaped, and are substantially rectangular when viewed in transverse cross section. In this case, the container portions 331 of the holder 303 are also configured to be substantially rectangular when viewed in transverse cross section. In FIG. 9, like the second embodiment, pressing plates 333 constituting the pressing portions are provided. Specifically, the holder body 330 of the holder 303 have column-wised walls 336 (only two of them are shown in FIG. 9). Between the column-wise walls 336, four pairs of a plate-shaped contact wall 332 and a plate-shaped wall 337 which face the contact wall 332 are aligned in the column direction (only two pairs are shown in FIG. 9). The cell 320 is inserted in each of the container portions 331 in an axial direction of the container portions 331 from an axial end thereof. The longitudinal direction of the cells 320 and the axial direction of the container portion 331 correspond with each other. In each of the container portions 331, the cell 320 is arranged to contact the contact wall 332, and a pressing plate 333 is provided between the cell 320 and the flat wall 337. The pressing plate 333 is a plate-shaped member extending in the axial direction of the container portion 331, and a center thereof in the row direction protrudes in the column direction as compared with the ends in the row direction. Specifically, the pressing plate 333 has a step between the ends in the row direction and the other part. The ends of the pressing portion 333 in the row direction contact the flat wall 337, while the protruding center of pressing plate 333 contacts the cell 320. In this state, the pressing plate 333 is elastically deformed to press the cell 320 toward the contact wall 332 by the elastic force. Thus, an outer surface of the cell 320 contacts the contact walls 332. A refrigerant passage 334 is formed between the flat wall 337 of one of adjacent container portions 331 and the contact wall 332 of the other container portion 331. Even when the cell 320 is rectangular, the outer surface of the cell 320 can be brought into contact with the inner surface of the container portion 331 (i.e., the contact wall 332) by pressing the cell 320 by the pressing plate 333.

The above-described embodiments have been set forth merely for the purposes of preferred examples in nature, and are not intended to limit the scope, applications, and use of the invention.

### INDUSTRIAL APPLICABILITY

As described above, the present invention is useful for battery modules including a plurality of cells, and a holder for holding the cells, or battery modules including a plurality of columnar cells.

### DESCRIPTION OF REFERENCE CHARACTERS

- 1: Battery module
- 20: Cell
- 3: Holder
- 30: Holder body
- 31: Container portion
- 33: Pressing wall (pressing portion)
- 34: Refrigerant passage (temperature adjusting portion)
- 4: Phase change element
- 203: Holder
- 230: Holder body
- 231: Container portion
- 233: Pressing plate (pressing portion)
- 234: Refrigerant passage (temperature regulating portion)
- 320: Cell
- 303: Holder
- 330: Holder body
- 333: Pressing plate (pressing portion)

## Claims

1. A battery module comprising:
a plurality of substantially columnar or plate-shaped cells; and
a holder for holding the cells, wherein
the holder is made of metal or highly thermally conductive resin, and includes cylindrical container portions for containing the cells, respectively, a temperature adjusting portion for adjusting temperature of the cells, and pressing portions for pressing the cells toward inner circumferential surfaces of the container portions, respectively, and
outer circumferential surfaces of the cells pressed by the pressing portions are in contact with the inner circumferential surfaces of the container portions, respectively.

2. The battery module of claim 1, wherein
the plurality of cells are connected in parallel.

3. The battery module of claim 1 or 2, wherein
the holder is configured to allow insertion of each of the cells from an axial end to the other axial end of the container portion.

4. The battery module of any one of claims 1-3, wherein
each of the pressing portions elastically presses the cell.

5. The battery module of any one of claims 1-4, wherein
the holder includes a holder body including the container portions, and
the pressing portions are separate from the holder body.

6. The battery module of any one of claims 1-4, wherein
the holder includes a holder body including the container portions, and
the pressing portions are integral with the holder body.

7. The battery module of any one of claims 1-6, wherein
the temperature adjusting portion is a refrigerant passage which is formed in the holder to air-cool the holder.

8. The battery module of any one of claims 1-6, wherein
the temperature adjusting portion is a refrigerant passage which is formed in the holder to liquid-cool the holder.

9. The battery module of claim 7 or 8, wherein
each of the pressing portions is comprised of a wall which forms the refrigerant passage.

10. The battery module of any one of claims 1-6, wherein
the temperature adjusting portion is a phase change element which changes its phase by absorbing heat of the cells.

11. The battery module of claim 10, wherein
the phase change element is not in contact with the cells, and is thermally connected to the cells through the holder.

12. The battery module of claim 10 or 11, wherein
the phase change element changes its phase at a phase change temperature higher than a maximum operating temperature of the cells.

13. The battery module of any one of claims 10-12, wherein
the phase change element changes its phase from a solid phase to a liquid phase by absorbing heat of the cells.

14. The battery module of any one of claims 1-13, wherein
the phase change element changes its phase at a phase change temperature lower than a maximum allowable temperature of the cells.

15. The battery module of any one of claims 1, and 3-14, further comprising:
multiple ones of the holder, wherein
the cells in each of the holders are connected in parallel, and
the cells held in one of the holders are connected in series to the cells held in the other one of the holders.

16. A battery module including a plurality of cells, the battery module comprising:
a holder for holding the plurality of cells; and
a phase change element which is arranged in the holder, and changes its phase by absorbing heat of the cells, wherein
the phase change element is not in contact with the cells, and is thermally connected to the cells through the holder.

17. The battery module of claim 16, wherein
the phase change element changes its phase at a phase change temperature higher than a maximum operating temperature of the cells.

18. The battery module of claim 16 or 17, wherein
the phase change element changes its phase from a solid phase to a liquid phase by absorbing the heat of the cells.

19. The battery module of any one of claims 16-18, wherein
the phase change element changes its phase at a phase change temperature lower than a maximum allowable temperature of the cells.

20. The battery module of any one of claims 16-19, wherein
the cells are columnar or plate-shaped,
the holder is made of metal or highly thermally conductive resin, and includes cylindrical container portions for containing the cells, respectively, and pressing portions for pressing the cells toward inner circumferential surfaces of the container portions, and
outer circumferential surfaces of the cells pressed by the pressing portions are in contact with the inner circumferential surfaces of the container portions, respectively.

21. The battery module of claim 20, wherein
the cells are connected in parallel.

22. The battery module of claim 20 or 21, wherein
the holder is configured to allow insertion of each of the cells from an axial end to the other axial end of the container portion.

23. The battery module of any one of claims 20-22, wherein
each of the pressing portions elastically presses the cell.

24. The battery module of any one of claims 20-23, wherein
the holder includes a holder body including the container portions, and
the pressing portions are separate from the holder body.

25. The battery module of any one of claims 20-23, wherein
the holder includes a holder body including the container portions, and
the pressing portions are integral with the holder body.

26. The battery module of any one of claims 20-25, wherein
the holder includes a refrigerant passage for air-cooling the holder.

27. The battery module of any one of claims 20-25, wherein
the holder includes a refrigerant passage for liquid-cooling the holder.

28. The battery module of claim 26 or 27, wherein
each of the pressing portions is comprised of a wall which forms the refrigerant passage.

29. The battery module of any one of claims 20, and 22-28, further comprising:
multiple ones of the holder, wherein
the cells in each of the holders are connected in parallel, and
the cells held in one of the holders are connected in series to the cells held in the other one of the holders.

## Amended claims

### Amended claims under Art. 19.1 PCT

**1.** (amended) A battery module comprising:
a plurality of substantially columnar or plate-shaped cells; and
a holder for holding the cells, wherein
the holder is made of metal or highly thermally conductive resin, and includes cylindrical container portions for containing the cells, respectively, a temperature adjusting portion for adjusting temperature of the cells, and pressing portions for pressing the cells toward inner circumferential surfaces of the container portions, respectively,
outer circumferential surfaces of the cells pressed by the pressing portions are in contact with the inner circumferential surfaces of the container portions, respectively,
the temperature adjusting portion is a refrigerant passage which is formed in the holder to air-cool or liquid-cool the holder, and
each of the pressing portions is comprised of a wall which forms the refrigerant passage.

**2.** (canceled)

**3.** (amended) The battery module of claim 1, wherein
the holder is configured to allow insertion of each of the cells from an axial end to the other axial end of the container portion.

**4.** (canceled)

**5.** (amended) The battery module of claim 1 or 3, wherein
the holder includes a holder body including the container portions, and the pressing portions are separate from the holder body.

**6.** (amended) The battery module of claim 1 or 3, wherein
the holder includes a holder body including the container portions, and the pressing portions are integral with the holder body.

**7.** (canceled)

**8.** (canceled)

**9.** (canceled)

**10.** (amended) The battery module of any one of claims 1, 3, 5, and 6, wherein the temperature adjusting portion is a phase change element which changes its phase by absorbing heat of the cells.

**11.** (canceled)

**12.** (canceled)

**13.** (canceled)

**14.** (canceled)

**15.** (amended) The battery module of any one of claims 1, 3, 5, and 6-10, further comprising:
multiple ones of the holder, wherein
the cells in each of the holders are connected in parallel, and
the cells held in one of the holders are connected in series to the cells held in the other one of the holders.

**16.** (amended) A battery module including a plurality of cells, the battery module comprising:
a holder for holding the plurality of cells; and
a phase change element which is arranged in the holder, and changes its phase by absorbing heat of the cells, wherein
the phase change element is not in contact with the cells, and is thermally connected to the cells through the holder,
the cells are columnar or plate-shaped,
the holder is made of metal or highly thermally conductive resin, and includes cylindrical container portions for containing the cells, respectively, and pressing portions for pressing the cells toward inner circumferential surfaces of the container portions,
outer circumferential surfaces of the cells pressed by the pressing portions are in contact with the inner circumferential surfaces of the container portions, respectively, and
the holder includes a refrigerant passage for air-cooling or liquid-cooling the holder.

**17.** The battery module of claim 16, wherein
the phase change element changes its phase at a phase change temperature higher than a maximum operating temperature of the cells.

**18.** The battery module of claim 16 or 17, wherein
the phase change element changes its phase from a solid phase to a liquid phase by absorbing the heat of the cells.

**19.** The battery module of any one of claims 16-18, wherein
the phase change element changes its phase at a phase change temperature lower than a maximum allowable temperature of the cells.

**20.** (canceled)

**21.** (canceled)

**22.** (amended) The battery module of claim 16, wherein
the holder is configured to allow insertion of each of the cells from an axial end to the other axial end of the container portion.

**23.** (canceled)

**24.** (amended) The battery module of claim 16 or 22, wherein
the holder includes a holder body including the container portions, and
the pressing portions are separate from the holder body.

**25.** (amended) The battery module of claim 16 or 22, wherein
the holder includes a holder body including the container portions, and
the pressing portions are integral with the holder body.

**26.** (canceled)

**27.** (canceled)

**28.** (amended) The battery module of claim 16, wherein
each of the pressing portions is comprised of a wall which forms the refrigerant passage.

**29.** (amended) The battery module of any one of claims 16, 22, 24, 25, and 28, further
comprising:
multiple ones of the holder, wherein
the cells in each of the holders are connected in parallel, and
the cells held in one of the holders are connected in series to the cells held in the other one of the holders.
